(19) Europäisches Patentamt
European Patent Office
Office européen des brevets

(11) **EP 1 249 465 B1**

(12) **EUROPÄISCHE PATENTSCHRIFT**

(45) Veröffentlichungstag und Bekanntmachung des Hinweises auf die Patenterteilung:
**20.10.2004 Patentblatt 2004/43**

(51) Int Cl.$^7$: **C08G 69/20**, C08G 69/46

(21) Anmeldenummer: **02006347.5**

(22) Anmeldetag: **21.03.2002**

(54) **Anionisch hergestelltes Polyamid und Verfahren zu seiner Herstellung sowie ein Verfahren zum Wiederaufbereiten von Polyamid**

Polyamide synthesized by anionic polymerization, process for producing the same and process for recycling polyamide

Polyamide obtenu par polymérisation anionique, son procédé de production et procédé pour recycler polyamide

(84) Benannte Vertragsstaaten:
**DE ES FR GB IT NL**

(30) Priorität: **12.04.2001 DE 10118453**

(43) Veröffentlichungstag der Anmeldung:
**16.10.2002 Patentblatt 2002/42**

(73) Patentinhaber: **EMS-Chemie AG**
**7013 Domat/Ems (CH)**

(72) Erfinder:
- **Schmid, Eduard**
  **7402 Bonaduz (CH)**
- **Laudonia, Ivano**
  **7430 Thusis (CH)**
- **Ernst, Hansjörg**
  **7402 Bonaduz (CH)**

- **Kägi, Werner**
  **7013 Domat/Ems (CH)**

(74) Vertreter: **Pfenning, Meinig & Partner GbR**
**Mozartstrasse 17**
**80336 München (DE)**

(56) Entgegenhaltungen:
**EP-A- 0 410 230        DE-A- 2 241 133**

- **K. UEDA ET AL.: "Stabilization of High Molecular Weight Nylon 6 Synthesized by Anionic Polymerization of e-Caprolactam" POLYMER JOURNAL, Bd. 28, Nr. 12, 1996, Seiten 1084--1089, XP001079538**
- **PATENT ABSTRACTS OF JAPAN vol. 1996, no. 10, 31. Oktober 1996 (1996-10-31) & JP 08 157594 A (UNITIKA LTD), 18. Juni 1996 (1996-06-18)**

**Beschreibung**

Die Erfindung betrifft ein beim Wiederaufschmelzen abbaustabiles, durch die anionische Polymerisation von Lactam hergestelltes Polyamid. Ferner betrifft die Erfindung die Herstellung des Polyamids unter Verwendung eines anionischen Katalysatorsystems, bevorzugt in einem kontinuierlichen Prozess. Dabei wird so vorgegangen, dass in einer definierten Verfahrenszone die Polymerisation so weit abläuft, dass der Umsatz von Lactam zu Polylactam gerade erfolgt ist, man danach anschliessend die Aktivität des Katalysators durch homogenes Einmischen protischer Verbindungen aufhebt, wonach weitere Verfahrensschritte folgen können. Dadurch gelingt es eine Polyamidformmasse zu erzeugen, die verarbeitungsstabil ist.

Die Erfindung betrifft weiterhin ein Verfahren zum Wiederaufbereiten von anionisch hergestelltem Polyamid, bei dem Polyamid zerkleinert und anschließend mit dem Desaktivator versetzt, aufgeschmolzen und extrudiert wird.

Die anionische Lactampolymerisation ist umfassend beschrieben in Kunststoff-Handbuch 3/4, "Polyamide", Carl Hanser Verlag, München 1998. In der praktischen Anwendung hat sich dabei insbesondere die aktivierte, anionische Lactampolymerisation durchgesetzt und wird bevorzugt zur Herstellung zäher, voluminöser Gussteile eingesetzt (Gusspolyamid).

Dabei bildet die Aktivatorgruppe, welche das erste Lactammolekül acyliert hat das eine Kettenende, wonach jeweils Lactamat unter Ringöffnung und Rückbildung das eigentliche Kettenwachstum bewirkt.

Eine Vielzahl der Patente zur aktivierten, anionischen Lactampolymerisation betrifft die Aktivatoren.

Aus der DE 197 15 679 A1 ist ein spezielles System bekannt geworden. Danach sind in einem Solvatisierungsmittel Teilchen enthalten, welche bei Zugabe zur Lactamschmelze die Aktivator- und die Katalysatorfunktion übernehmen, so dass der Lactamschmelze nur noch eine Komponente zugefügt werden muss, welche dann die beschleunigte Lactampolymerisation direkt auslöst.

In S.K. Ha, J.L. White: Continuous Polymerization and Copolymerization of Lauryl Lactam in a Modular Corotating Twin Screw Extruder, Intern. Polymer Processing XIII (1998) 2, p. 136-141, sind Arbeiten beschrieben, wo unter getrennter Zugabe von Katalysator (Na-Caprolactamat gelöst in Lactam-6) sowie Aktivator die Lactampolymerisation in einem Doppelwellenextruder kontinuierlich durchgeführt wird. Dabei sind insbesondere Verfahrensparameter beschrieben und optimiert. Versuche zur weiteren Umformung der Granulate und Untersuchungen zum Verhalten von Gebrauchsgegenständen aus anionisch polymerisiertem Lactam sind nicht beschrieben.

Aus der DE-OS 22 41 133 ist weiterhin ein Verfahren zum Herstellen von Polyamiden mit hohem Molekulargewicht bekannt. Auch bei diesem Verfahren handelt es sich um eine anionische Polymerisation von Lactamen im wasserfreien Medium in Gegenwart von alkalischen Katalysatoren. Darin wird vorgeschlagen, dass dem erhaltenen Polymerisat eine oder mehrere Verbindungen zugesetzt werden die unter den gegebenen Verfahrensbedingungen stärker sauer sind als die Amidfunktion der Polymerisate und der Lactame und nur zu einer begrenzten oder gleich 0 betragenden Acidolyse der Polymerisatketten führen. Als Verbindungen werden hierzu Sulfonsäure bzw. Sulfonsäureester vorgeschlagen.

Wie anhand von Laborversuchen gezeigt werden konnte, läßt sich jedoch diese frisch polymerisierte Schmelze nur unzureichend stabilisieren. Werden nämlich die dort angesprochenen sauren Zusätze, insbesondere im beschriebenen molaren Überschuss in einem praxisüblichen Extrusionsprozess verwendet, so tritt eine massive Korrosion der Maschinenteile ein. Es hat sich weiterhin herausgestellt, dass dann, wenn ein entsprechender Extrusionsstrang wie üblich zur Kühlung und nachfolgenden Granulierung durch ein Wasserbad gezogen wird, sich $H_3O^+$-Ionen bilden, die beim Wiederaufschmelzen für die thermoplastische Umformung eine Kettenspaltung bewirken. Entsprechend sauer eingestellte Polyamidformkörper erwiesen sich dabei als für den Praxiseinsatz ungeeignet, weil sie abbauempfindlich bei Hydrolyse-, Hitze- und Strahlungseinwirkung sind, was insbesondere beim Wiederaufschmelzen zu einem starken Viskositätsabbau führt.

In Ueda et al.: Stabilization of High Molecular Weight Nylon in Polymer Journal, Bd 28 Nr 12, 1996 Seiten 1084-1089 ist die Herstellung eines Polyamids beschrieben welches durch zugabe einer Säure stabilisiert wurde.

Weitere Verfahren zur Neutralisierung des Katalysators sind in der DE-OS 22 41 132 sowie der DE-OS 22 41 131 offenbart. Bei der erstgenannten Offenlegungsschrift werden tertiäre Alkohole eingemischt, insbesondere t-Butylalkohol und bei der letztgenannten Malonsäureester.

Bei der Überprüfung der letztgenannten Verfahren hat sich herausgestellt, dass die darin zugesetzten schwachen protischen Verbindungen die anionische Lactampolymerisation nur verzögern aber nicht vollständig abbrechen, so dass sich dies auch in einer stetig leichten Abnahme des MVR (Volumenschmelzindex) zeigt, d.h. einer immer noch leichten Zunahme des Molekulargewichts.

Speziell erwähnt werden soll aber, dass insbesondere herkömmlich anionisch hergestelltes, nicht neutralsiertes Polyamid beim Wiederaufschmelzen einen massiven Kettenlängen- bzw. Viskositätsabbau erleidet. Diesbezüglich wird auf die EP 0 905 166 A1 verwiesen.

Zusammenfassend ist deshalb festzustellen, dass aus dem Stand der Technik kein anionisch hergestelltes Polyamid bekannt ist, das beim Wiederaufschmelzen nur eine geringfügige Viskositätsänderung zeigt.

Ausgehend hiervon ist es deshalb die Aufgabe der vorliegenden Erfindung, ein Polyamid anzugeben, das gute physikalische Eigenschaften, insbesondere in Bezug auf die Verarbeitungsstabilität besitzt und das gleichzeitig beim Wiederaufschmelzen nur einen "geringfügigen" Viskositätsabbau zeigt.

Die Erfindung wird in bezug auf das Polyamid durch die kennzeichnenden Merkmale des Patentanspruches 1 und in bezug auf das Verfahren zur Herstellung durch die kennzeichnenden Merkmale des Patentanspruches 15 gelöst. Die Merkmale des Anspruches 26 betreffen das Verfahren zum Wiederaufbereiten von Polyamid, das über anionische Polymerisation nach herkömmlichem Verfahren, ohne Desaktivierung des Katalysators, hergestellt wurde. Die Unteransprüche zeigen vorteilhafte Weiterbildungen auf.

Die Erfinder konnten zeigen, dass die Nachteile des Standes der Technik aufgehoben werden, wenn man die Lactamschmelze gerade so lange polymerisiert bis der Umsatz von Lactam zu Polylactam zu mindestens 90 Gew.-% bevorzugt zu 99 Gew. % bis ca. 99,9 Gew.-% erfolgt ist, man dann den Katalysator (das Lactamat) durch Zugabe einer Lactamat-protonierenden Verbindung (Desaktivator) in Form einer protischen Verbindung rasch und vollständig zerstört (wonach sich weitere Verfahrensschritte anschliessen können) und man danach die entsprechende Polylactamschmelze nach üblichen Verfahren für die weitere Verwendung granuliert, oder direkt zur Herstellung von Formkörpern verwendet.

Das so erhaltene Polyamid enthält dann noch den Desaktivator. Der Desaktivator, d.h. die protische Verbindung liegt dabei bevorzugt in einem Restanteil von mindestens 1 % des Ausgangswertes noch in ihrer protischen Form vor. Das erfindungsgemäße Polyamid weist darüber hinaus bevorzugt eine Polydispersität D von $\leq 5{,}0$ sowie eine relative Viskosität $\eta_{rel}$ von $\geq 1{,}55$ gemessen nach EN ISO 307 auf. Die Polydispersität von Polymeren und deren Bestimmung ist z.B. in Römpp-Lexikon Chemie, 10. Auflage, Seite 2735 beschrieben. Bemerkenswert ist, dass die erfindungsgemäß erhaltnen Polyamide in den meisten Fällen sogar einen D-Wert $\leq 3$ zeigen und dass die relative Viskosität $\geq 1{,}7$ ist.

Beim erfindungsgemäßen Polyamid ist besonders seine Stabilität bei Wiederaufschmelzen hervorzuheben.

Die Charakterisierung der Stabilität erfolgt über den Viskositätsabbau $\Delta\eta_{rel}$, welcher gleich der Differenz zwischen den relativen Viskositäten des Polyamids vor und nach dem Wiederaufschmelzen ist. Da jedoch der Viskositätsabbau abhängig von der Anfangsviskosität d.h. dem Molekulargewicht ist, wird zur Charakterisierung des Viskositätsabbaus eine von den Erfindern empirisch ermittelte Beziehung herangezogen, die unabhängig von der Anfangsviskosität für eine bestimmte Anzahl Molekülkettenspaltungen pro Gewichtseinheit Polymer einen annähernd konstanten Wert ergibt.

Die Erfinder konnten nämlich zeigen, dass der <u>V</u>iskositäts<u>k</u>orrigierte <u>A</u>bbau

$$VKA = \frac{\Delta\eta_{rel}}{(\eta_{sp,1})^2}$$

ist. Wie die Erfinder belegen konnten, verhält sich somit die "Empfindlichkeit" eines bestimmten Polymers auf einen bestimmten Viskositätsabbau (ausgedrückt als $\Delta\eta_{rel}$) näherungsweise quadratisch zur spezifischen Anfangsviskosität $\eta_{sp,1}$. Dies gilt zumindest für den hier untersuchten Bereich. In bezug auf die Definition von $\eta_{rel}$ und $\eta_{sp}$ wird auf Römpp, 10. Auflage Seite 4870 verwiesen. Dabei ist die spezifische Viskosität $\eta_{sp}$ der über den Anteil des reinen Lösungsmittels hinausgehende polymerspezifische Teil der relativen Viskosität $\eta_{rel}$, d.h. $\eta_{sp} = \eta_{rel}-1$. Erfindungsgemäß ist nun der VKA des Polyamids $\leq 0{,}13$, bevorzugt $\leq 0{,}10$ und besonders bevorzugt $\leq 0{,}08$.

Anionisch hergestellte Polyamide mit diesen Eigenschaften sind im Stand der Technik bisher nicht bekannt geworden.

Als Desaktivator im Sinne der vorliegenden Erfindung eignen sich die Substanzen nach Patentanspruch 1 welche den Katalysator rasch und irreversibel zerstören.

Es hat sich erstaunlicherweise gezeigt, dass viele Verbindungsklassen dazu in der Lage sind. Es handelt sich dabei bevorzugt um protische Verbindungen mit einer Aciditätskonstante pK von kleiner als ca. 14. Gemäß der Erfindung werden organische Carbonsäuren in oligomerer bzw. niedermolekularer Form, besonders bevorzugt auch polymerer Form eingesetzt, wobei ein stöchiometrischer 1:1-Anteil genügt um den Katalysator vollständig zu zerstören.

Bei den organischen Carbonsäuren sind diejenigen besonders bevorzugt bei denen die Carboxylgruppen sterisch gehindert sind, d.h. in ihrer Beweglichkeit eingeschränkt und/oder abgeschirmt sind. Hierzu gehören insbesondere Verbindungen, d.h. Desaktivatoren in polymerer bzw. oligomerer Form bei denen die COOH-Gruppen an die Hauptkette gebunden sind. Beispiele sind in den Ansprüchen 6 und 7 angegeben.

Vertreter aus der Gruppe der Carbonsäuren sind: Stearinsäure, Versaticacid oder Benzoesäure, sowie Polysäuren, wie z.B. Dodecandisäure oder auch Iso- und -Terephthalsäure sowie oligomere, wachsartige Produkte wie z.B. oxidierte Polyäthylenwachse oder auch COOHgruppenhaltige Polyamidoligomere, die linear, verzweigt oder sternförmig sein können, mit einem mittleren Molekulargewicht von 500-10000 g/mol, sowie bevorzugt auch carbonsaure Copolymere mit breitem Molekulargewichtsspektrum. Beispiele sind Äthylen(meth)acrylsäurecopolymere, wobei viele weitere Comonomere wie langkettige bzw. verzweigte Olefine, Carbonsäureester, veresterte Alkohole, etc. mitverwendet werden können. Beispiele für solche Comonomere sind Buten, Alkyl(meth)acrylat, Vinylalkohol und Vinylacetat und auch Styrol.

Unerwarteterweise hat es sich gezeigt, dass sich auch saure Polymere dann hervorragend eignen, wenn ihre -COOH-Gruppen mit Metallverbindungen teilneutralisert sind und sich die Gegenionen der -COO$^\ominus$-Gruppen z.B. von Na, K, Ca, Zn, Li, und Mg ableiten. Solche Polyolefinabkömmlinge werden als Ionomere bezeichnet (s. Römpp), und insbesondere die sogenannten Zn-Ionomere sind ausserordentlich gut mit Polylactam wie z.B Polylaurinlactam verträglich und damit auch hochwirksam bzgl. Katalysatorzerstörung. Enthalten sie weitere Comonomere in anwendungsgeeignetem Anteil, so können sie zusätzlich die Zähigkeit erhöhen und das Produkt z.B. flexibilisieren. Dabei geht oft die gewünschte Transluscenz des Polyamids nicht verloren oder wird gar noch erhöht. In vielen Fällen sind aber übliche sogenannte EAA-Copolymere (ethylene acrylic acid copolymers) wie sie z.B. durch die Firma DOW mit unterschiedlichstem Säureanteil und MVR hergestellt werden, geeignet. Dabei kann der molare Anteil der zugesetzten COOH-Gruppen ein Mehrfaches der aufzuhebenden Basizität des Katalysators ausmachen. Das zugesetzte EAA wirkt dann bevorzugt auch als Schlagzähmittel.

Zusammenfassend lässt sich feststellen, dass bei den organischen Carbonsäuren in niedermolekularer aber insbesondere in polymerer Form die besonderes bevorzugt sind, bei denen die Carbonsäure mit sterischer Hinderung in der Polymerkette direkt eingebaut, d.h. die Carboxylgruppe unmittelbar an die Hauptkette gebunden ist. Bei Mono- und Di-Carbonsäuren sowie oxidierten Wachsen, bei denen die Carboxylgruppe leicht zugänglich ist oder bei Olefinen mit angepfropfter Maleinsäure wo jeweils die sterische Hinderung fehlt, ist der Überschuß jedoch zu begrenzen.

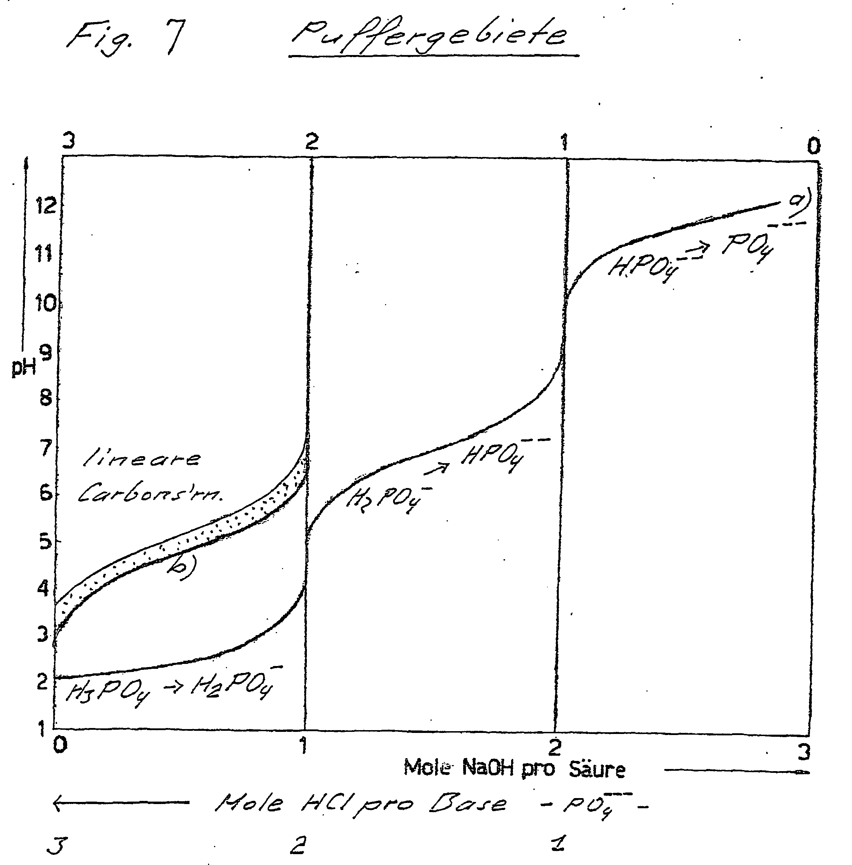

Die Erfindung umfasst bei den Desaktivatoren weiterhin die Säuren des Phosphors und Bors. Bevorzugt sind hierbei Säuren des Phosphors in monomerer und oligomerer Form, die Säuregruppen unterschiedlicher Acidität besitzen. Geeignet ist z.B. $H_3PO_4$ und die daraus entstandenen Kondensationsprodukte. Vorteilhaft bei den Phophorsäuren ist, dass diese mehrere Puffergebiete aufweisen, wobei eine Neutralisation im basischen Bereich oft geeignet ist. In Fig. 7 sind Puffergebiete für a) Phosphorsäure ($H_3PO_4$) und b) die linearen aliphatischen Carbonsäuren abgebildet.

Aus stofflicher Sicht in bezug auf die Ausgangskomponente umfaßt die Erfindung alle bekannten Lactame.

Als Lactame eignen sich besonders die Vertreter mit 5-12 C-Atomen, insbesondere aber Lactam-6 sowie Lacam-12 und ihre Gemische, wobei Lactam-12 besonders bevorzugt ist, weil es sich auch bei Temperaturen von ca. 200-320°C, bevorzugt 200-300 °C und besonders bevorzugt 200-280 °C zu mindestens 99 Gew.-% zum Polylactam umsetzen lässt und der Umsatz weitgehend ihreversibel verläuft.

Als Katalysatoren eignen sich die in der Literatur beschriebenen Katalysatoren und Katalysatorsysteme, insbesondere Metall-Lactamate, bzw. Lactamat-bildende Verbindungen.

Beispiele sind Natrium- und Magnesiumlactamat und weitere aus der Literatur bekannte Magnesiumverbindungen. Hauptsächlich verwendeter Katalysator ist aber käufliches Natriumcaprolactamat gelöst in Caprolactam.

Die im Rahmen der Erfindung eingesetzten Aktivatoren sind bekannt.

Aktivatoren wirken als Starter = Auslöser der anionischen Lactampolymerisation, indem sie die CONH-Bindung im Lactam aktivieren und so bei Zutritt von Lactamat die Startreaktion der anionischen Polymerisation einleiten. Übliche käufliche Aktivatoren sind z.B. N-acylierte Lactame wie. z.B. N-Acetylcaprolactam. Oft werden auch direkt mit dem Lactam reagierende Verbindungen wie Isocyanate, die auch nach dem üblichen Stand der Technik verkappt sein können, und Carbodiimide verwendet, welche nach Umsatz mit dem Lactam dessen CONH-Bindung aktivieren. Beispiele dazu sind z.B. Hexamethylendiisocyanat oder Phenylisocyanat, das auch trimerisiert in der Isocyanuratform vorliegen kann. Wird dabei z.B. ein Diiisocyanat verwendet, so wächst die Polylactamkette nach Zugabe von Katalysator, bzw. Lactamat in zwei Richtungen, wird ein Monoisocyanat wie z.B. Phenylisocyanat oder auch Stearylisocyanat verwendet, wächst die Kette in einer Richtung wobei diese Regeln bevorzugt solange gelten, wie noch ein Überschuss an freiem Lactam vorhanden ist.

Eine bevorzugte Verbindungsklasse für die Durchführung der beschriebenen Erfindung sind aber Katalysator-Aktivatorsysteme wie sie z.B. in der DE 197 156 79 beschrieben sind.

Diese zeichnen sich dadurch aus, dass dem Lactam, insbesondere der Lactamschmelze, nur eine Formulierung, welche zudem bevorzugt als einfach dosierbare Flüssigkeit vorliegt, zugefügt werden muss.

Die Erfindung betrifft nach Patentanspruch 15 weiterhin ein Verfahren zur Herstellung von Polyamiden wie vorstehend beschrieben.

Anionisch polymerisiertes Polylactam, insbesondere Polycaprolactam, wird bisher fast ausschliesslich im Gussprozess oft zu grossvolumigen Teilen wie z.B. Kranaufleger verwendet, weil von einer niederviskosen, leicht giessbaren Schmelze ausgegangen werden kann. Dabei wird insbesondere eine hohe Bruchfestigkeit angestrebt, und der molekulare Aufbau hat keinen speziellen Anforderungen bzgl. Wiederverwendbarkeit z.B. im Thermoplastprozess zu genügen. Wegen der guten Verarbeitbarkeit in Thermoplastprozessen und der dabei guten Stabilität gegen Abbau beim Wiederaufschmelzen wird für sogenannte Thermoplastverfahren heute fast ausschliesslich hydrolytisch hergestelltes Polylactam verwendet.

Rezepturen und Verfahren zur vereinfachten Herstellung von Polylactam, das sich dann leicht und ohne Abbau weiterverarbeiten lässt und zu Gebrauchsgegenständen mit praxistauglichen Eigenschaften führt, stellen damit einen wesentlichen technischen Fortschritt dar.

Erstaunlicherweise hat sich gezeigt, dass das erfindungsgemäße Verfahren insbesondere zu Polyamid in Granulatform führt, welches sich leicht und verarbeitungsstabil zu Gebrauchsgegenständen, wie z.B. Rohren, von hohem Anwendungswert thermoplastisch umformen lässt.

Das neue Verfahren in bevorzugter Ausführungsform zeichnet sich dadurch aus, dass eine Lactamschmelze mit Hilfe eines Katalysator-Aktivatorsystems bei geeigneter Reaktionsführung solange umgesetzt wird, bis ein Lactamumsatz von mindestens ca. 90 Gew.-%, bevorzugt von 99 Gew.-% bei Lactam-12, erfolgt ist , man danach einen Desaktivator zufügt, welcher den Katalysator irreversibel zerstört, man gegebenenfalls direkt weitere Verfahrensschritte anschliesst, man dann direkt einen Gebrauchsgegenstand formt, bzw. man die Schmelze direkt in Granulat überführt, welches dann zu Gebrauchsgegenständen von hohem Anwendung swert thermoplastisch nach üblichen Verfahren verarbeitet werden kann.

Der neue Prozess ist insbesondere für kontinuierliche Verfahren geeignet, wofür sich speziell Doppelwellenextruder mit gleichläufigen Schnecken und speziellen Verfahrenselementen eignen.

Man kann aber auch mehrstufig arbeiten, indem man z.B. eine Lactamschmelze in einem kontinuierlichen Prozess z.B. mittels eines dynamischen (rotierenden) oder auch statischen Durchlaufmischers mit dem Katalysator/ Aktivator aktiviert und dann unter konstanter Förderung z.B. in einem Einwellen- oder auch einem Doppelwellenextruder unter geeigneter Wahl von Temperatur und Verweilzeit solange polymerisiert, dass das Lactam gerade zum Polylactam umgesetzt ist und man danach austrägt und granuliert. Anschliessend wird dann in einem zweiten Extrusionsdurchgang z.B. in einem Extruder für Compoundieraufgaben wie etwa einem Doppelwellenextruder der Desaktivator möglichst zu Beginn des Aufschmelzvorganges zugefügt und in die Schmelze eingearbeitet, wobei ergänzend die Einarbeitung aller weiteren Verbindungen und Zusätze, die für ein Marktprodukt notwendig sind, erfolgen kann.

Das Verfahren kann also auf vielfältige Arten durchgeführt werden, wobei das Hauptziel darin besteht, zu einem verarbeitungsstabilen Polyamid zu gelangen, das ohne wesentlichen Abbau über die Schmelze zu Gegenständen von hohem Gebrauchswert umgeformt werden kann.

Für den Beginn der Verfahrensdurchführung ist es von besonderem Vorteil, wenn der Katalysator/Aktivator rasch und homogen in der Lactamschmelze verteilt wird und das Kettenwachstum möglichst einheitlich verläuft, sowie nach erfolgtem, weitgehendem Lactamumsatz der Katalysator rasch und in der gesamten, nun viskosen Polylactammasse zerstört wird. - Dies bietet verfahrenstechnische Anforderungen, welche es nahelegen, das gesamte Verfahren in einer kontinuierlich mischenden Maschine mit den notwendigen Zuführ- und Mischelementen durchzuführen. Doppelwellenextruder mit gleichläufigen Schnecken, wie z.B. die Technikumsmaschine ZSK-25 der Fa. Werner + Pfleiderer, Stuttgart, die ausserordentlich variabel ausgerüstet werden kann bezüglich Verfahrenslängen, Dosiervorrichtungen, Misch- und Sperrelementen, eignet sich zur Optimierung der an die Anwendung angepassten Rezepturen und Verfahrensbedingungen.

Dabei kann in der Einzugszone des Extruders zunächst das Lactam aufgeschmolzen werden bzw. kann man den Extruder auch z.B. aus einem Vorratstank kontinuierlich mit Lactamschmelze beschicken. Nun hat Zugabe des Katalysator/Aktivators zur Lactamschmelze unter raschem homogenem Einmischen zu erfolgen, so dass die Polymerisation möglichst gleichzeitig in der gesamten Polylactamschmelze gestartet wird. Dieser Schritt kann nach vielen alternativen Verfahren durchgeführt werden, indem man z.B. nach dem bei der Lactampolymerisation wohlbekannten 2-Topfprinzip arbeitet, bzw. man festen Katalysator als Feststofflösung von Natriumcaprolactamat in Caprolactam dem Lactam in fester oder bereits geschmolzener Form zufügt und sodann den Aktivator wie z.B. ein flüssiges Isocyanat, das auch in verkappter oder cyclisierter Form oder auch gelöst vorliegen kann, oder N-acyliertes Lactam der katalysatorhaltigen Lactamschmelze zuführt.

Speziell geeignet im Verfahren sind polymerisationsauslösende Systeme, welche gleichzeitig die Funktion von Katalysator und Aktivator enthalten. Bevorzugt sind dabei solche Systeme, welche in Flüssigform vorliegen und z.B. mit Hilfe einer Flüssigkeitsdosierpumpe in konstantem Volumenanteil direkt in die Lactamschmelze dosiert werden können oder die man z.B. direkt über einen Staticmixer der Lactamschmelze zufügen kann. Derartige Systeme sind in der DE 197 15 679 A1 beschrieben.

Nach erfolgter Katalysator-Aktivatorzugabe und homogener Einmischung folgt der Polymerisationsprozess, wobei bevorzugt eine Pfropfströmung eingehalten wird, so dass alle wachsenden Polylactamketten möglichst identische Wachstumsbedingungen besitzen, welche insbesondere durch die Temperatur in dieser Zone und natürlich die Verweilzeit definiert sind.

Sobald der angestrebte Lactamumsatz erreicht ist (Lactam-6 ca. 90 %, Lactam-12 ca. 99-99,9 %), wird die Katalysatoraktivität durch möglichst rasches und homogenes Einmischen des Desaktivators gestoppt und der Katalysator zerstört. Dabei ist beim kontinuierlichen Verfahrensablauf die Zugabezone für den Desaktivator gegen die Polymerisationszone so abzugrenzen, dass möglichst kein Rückströmen des Desaktivators in die Polymerisationszone erfolgt. Der Desaktivator, der als Einzelsubstanz oder auch als Substanzgemisch eingesetzt werden kann, ist oft in der Lage, direkt Zusatzaufgaben im Polylactam wahrzunehmen.

Bevorzugt wird der Desaktivator daher als Substanzgemisch eingesetzt. Als Desaktivator kommen alle beim Polyamid beschriebenen Verbindungen in Frage.

Ist der Desaktivator ein saures Copolyolefin mitenthaltend langkettiges Alken, wie z.B. Buten, Hexen, Octen ect. oder auch Alkylester wie z.B. stammend von Butylacrylat, kann es flexibilisierend aber auch deutlich zähigkeitserhöhend wirken.

Ist der Desaktivator ein Ionomer z.B. basierend auf Zn oder Na oder ein EAA-Copolymer, das bei der Desaktivierungsreaktion auch zu einem Ionomer wird, und z.B. mitenthaltend Comonomere, wie z.B. Alkylacrylat, so erreicht man z.B. Transluzenz bei guter Zähigkeit und hoher Flexibilität, was für gewisse Anwendungen einen zusätzlichen Vorteil darstellt. Solche Desaktivatoren können auch einen hohen Überschuss an direkt in die Kette eingebauten COOH-Gruppen soweit enthalten, dass der Desaktivator seine Zusatzaufgaben, wie z.B. eine Schlagzähigkeitserhöhung, voll erfüllt.

Je nach Anforderung an das Endprodukt können natürlich verschiedene Desaktivatoren miteinander kombiniert werden. Dabei können die Desaktivatoren auf verschiedene Weise eingebracht werden z.B. auch als Masterbatch in z.B. Granulatform.

Desaktivatoren polymerer Natur, oder auch pulverförmige Typen, werden z.B. über eine Dosierbandwaage oder eine Stopfschnecke in die Schmelze eingetragen, wobei natürlich die aus der Technik bekannten Regeln des Dosierens und Einmischens beachtet werden müssen. Desaktivatoren können natürlich auch in geschmolzener Form über einen sogenannten "Side-feeder" eingespiesen werden.

Gemeinsam mit den verschiedenen Desaktivatoren oder auch nachfolgend können der Polylactamschmelze weitere Zusatzstoffe wie Mineralien, Glasfasern, Antiflammmittel, zähigkeitserhöhende Zusätze, Farbstoffe, Stabilisatoren, etc. und ihre Gemische zugefügt werden, mit dem Ziel, ein verarbeitungsgeeignetes Polylactamanwendungsprodukt bereitzustellen.

Danach werden sie homogen eingemischt und die fertig formulierte Polylactamschmelze unter Aufbau des nötigen Druckes der Austragsdüse des Extruders zugeführt und gemäss üblicher Technologie in Granulatform überführt, bzw. in einem geeigneten Werkzeug, beispielsweise einem Rohrkopf, direkt der Formgebung zur Anwendungsaufgabe z.B. einer Ummantelung, einer Beschichtung, einem Rohr oder Profil, zugeführt.

Es hat sich gezeigt, dass das wie vorstehend beschriebene erfindungsgemäße Verfahren am besten bei Temperaturen von 140-320° durchgeführt wird. Bevorzugt sind hierbei aber Temperaturen von 140-300°, besonders bevorzugt 140-280 °C.

Die Erfindung wird nun anhand von Beispielen, die nur eine Auswahl der vielfältigen Möglichkeiten zu ihrer Durchführung und Anwendung darstellen, näher erläutert.

Dabei hat es sich gezeigt, dass im Rahmen der Erfindung vielfältige Verfahrensvarianten angewendet werden können, um Kettenlängenabbau von anionisch polymerisiertem Polylactam beim Verarbeiten über die Schmelze zu vermeiden und um zu Polyamid von stabil engem Molekulargewicht zu gelangen.

Die Erfindung betrifft nach den Patentansprüchen 26 bis 31 weiterhin ein Verfahren zum Wiederaufbereiten von anionisch hergestelltem Polyamid.

Es handelt sich dabei um eine spezielle Anwendung des erfindungsgemäßen Verfahrens wie vorstehend erläutert. Bereits eingangs wurde dargelegt, dass das erfindungsgemäße Verfahren so wie es in Patentanspruch 16 gekennzeichnet ist, auch in zwei Schritten durchgeführt werden kann. Grundsätzlich ist es also im Rahmen der Erfindung nicht erforderlich, dass die Schritte a (Polymerisation) und b (Desaktivierung) aufeinanderfolgend durchgeführt werden, sondern dass auch eine größere Zeitspanne, d.h. mehrere Tage oder auch Monate oder sogar ein erster Anwendungs-bzw. Lebenszyklus z.B. als Matrix in einem Verbundwerkstoff oder als Gussteil zwischen dem Schritt a und b liegen können. Mit anderen Worten bedeutet dies, dass das erfindungsgemäße Verfahren auch für Polyamid durchgeführt werden kann, das bereits vor langer Zeit anionisch hergestellt werden ist und das dann mit dem Desaktivator wie in Patentanspruch 15 erläutert, behandelt wird. Somit eignet sich das erfindungsgemäße Verfahren wie es nun speziell durch die Patentansprüche 26 bis 31 gekennzeichnet ist, auch zum Wiederaufbereiten von bereits vorhandenem anionisch hergestellem Polyamid. Erfindungsgemäß wird dazu der Desaktivator in einer solchen Menge zugesetzt, dass mindestens die noch vom Katalysatorsystem vorhandene Basizität aufgehoben wird. Anschließend wird dann das Gemisch in einer an und für sich bekannten Weise gegebenenfalls unter Zusatz von Hilfsstoffen wie Matrixmaterial, Ruß oder Stabilisatoren aufgeschmolzen und extrudiert.

Das erfindungsgemäße Wiederaufbereitungsverfahren ist besonders dann von Vorteil, wenn das Polyamid mit Fasern gemischt vorliegt. Ganz besonders bevorzugt wird das erfindungsgemäße Verfahren nach den Patentansprüchen 26 bis 31 für Endlosfasergebilde wie z.B. Gewebe, Gewirke, Gestricke oder Gelege angewandt, wobei diese Endlosfasergebilde von Polyamid umhüllt sind, so dass ein Faserverbundwerkstoff vorliegt.

Verfahrensgemäß ist dann vorgesehen, dass diese Verbundwerkstoffteile zerkleinert werden und dann die Bruchstücke mit dem erfindungsgemäßen Desaktivator wie bereits vorstehend beschrieben, vermischt werden. Dieses Gemisch wird dann bevorzugt einem kontinuierlichen Aufschmelzprozeß in einem Doppelwellenextruder, wobei die Schmelze homogenisiert wird, unterzogen. Bevorzugt wird die Schmelze dann wieder als Strang über ein wäßriges Kühlbad abgezogen und zu Granulat zerkleinert.

Auf diese Weise gelangt man zu einem faserverstärkten Polylactamgranulat von hohem Gebrauchswert, das in üblichen Thermoplastifizierprozessen, insbesondere einem Spritzgußverfahren zu Fertigteilen mit neuen Anwendungsmöglichkeiten umgeformt werden kann. Ohne das erfindungsgemäße Verfahren war bisher oft keine stoffliche Wiederverwertung mehr möglich.

In der folgenden Zusammenstellung sind die in den Beispielen und Vergleichsbeispielen verwendeten Abkürzungen erklärt.

**Zusammenstellung der Abkürzungen der Beispiele**

**1. Desaktivatoren**

| Bezeichnung | Hersteller | Bemerkungen |
| --- | --- | --- |
| Surlyn 9320 u. 9120 | Du Pont, Delaware, US | Ionomer, teilneutralisiert mit Zn |
| Primacor 3340 | Dow, Horgen, CH | Äthylenacrylsäurecopolymer; 6.5% Acrylsäure |
| Lucalen 2920 | BASF, Ludwigshafen | Copolyolefin mit 4% Acrylsäure |
| Luvax EAS | BASF, Ludwigshafen | Polyäthylenwachs mit 5,5 % Acrylsäure |

Als Verarbeitungshilfsmittel im Spritzgussprozess (für besseren Extrudereinzug) wurde bei Bedarf zusätzlich Acrawachs-C von der Firma Lonza (Basel, CH) eingesetzt, ein Äthylenbisstearamid, das keine Desaktivatorfunktion besitzt.

**2. Analytik und Testmethoden**

- $\eta_{rel}$ = relative Viskosität, gemessen an einer 0,5 Gew.-%igen Lösung von Polyamid in m-Kresol nach EN ISO 307
- MVR (früher oft auch als MVI bezeichnet), der Volumenschmelzindex in $cm^3$ pro 10 Min. gemessen nach einer Aufschmelzzeit von 4 Min. bei 275°C und einer Belastung von 5 kg nach EN ISO 1133. In dieser Norm sind auch definierte Aufschmelzbedingungen festgelegt, die praxisnah sind und die man zur Bestimmung des Viskositätsabbaus $\Delta\eta_{rel}$ bzw. von VKA unter Verwendung eines MVR-Gerätes heranziehen kann.
- MGV= Molekulargewichtsverteilung.- Diese wurde nach Derivatisierung der Proben mit Trifluoressigsäureanhydrid in Tetrahydrofuran als Lösemittel mittels GPC (Gelpermeationschromatographie) bestimmt. Daraus wurde die Polydispersität $D = M_w/M_n$ ermittelt (vgl. Römpp).

3. **Mechanische Werte**

- SZZ-Stäbe: Schlagzugstäbe, 1mm dick
- SZZ: Schlagzugzähigkeit,in $kJ/mm^2$
- Hitzelagerung: nach ICE 216
- Bewitterung: nach ISO 4892-2

**Versuche 1-6 und Vergleichsversuch X1**

Zur Durchführung der Versuche 1-6 wurde zweistufig so vorgegangen, dass zunächst in einem kontinuierlichen Verfahren anionisch polymerisiertes Polyamid-12 in Granulatform hergestellt wurde und dieses nachfolgend im Spritzguss unter Zugabe von die Katalysatoraktivität zerstörenden Zusätzen zu Prüfkörpern verarbeitet wurde.

Zur Granulatherstellung wurden Lactam-12-Pillen vorgetrocknet und sodann kontinuierlich einem Doppelwellenextruder, ZSK-25, der Firma Werner und Pfleiderer Stuttgart, zugeführt, wo sie unter Verwendung einer üblichen Compoundierschnecke und üblichen Verfahrensbedingungen, nämlich 150 Umdrehungen pro Minute und einer gleichbleibenden Einstelltemperatur aller Gehäuseeinheiten von 270°C ab Polymerisationsbeginn bei einem Durchsatz von 10kg/h zunächst aufgeschmolzen wurden. Unmittelbar nach dem Aufschmelzen wurde der Flüssigkatalysator, wie er in DE 197 15 679 beschrieben ist, in einer solchen Menge eingespritzt, dass 1 Äquivalent (Val) aktiver Flüssigkatalysator pro 225 Molteile Lactam-12 vorliegt. Der Flüssigkatalysator löst die Polymerisation sofort aus, so dass an der Düse ein kompakter Polymerstrang abgezogen werden kann, der nun im Wasserbad gekühlt, dann granuliert und das Granulat sodann verarbeitungsfertig getrocknet wird.

Um einen ersten Überblick über die Wirksamkeit der erfindungsgemässen, den Katalysator zerstörenden Verbindungen zu gewinnen, wurden die Granulate mit entsprechenden Zusätzen vorgemischt und diese Mischungen sodann auf einer üblichen Spritzgussmaschine, Typ Arburg-Allrounder 320-210-750 Hydronica, zu 4 mm dicken ISO-Zugstäben verspritzt, wobei übliche Spritzgussbedingungen entsprechend einer Massetemperatur von 258°C, einer Formtemperatur von 40 °C und einer Zykluszeit von 50 Sek. eingehalten wurden.

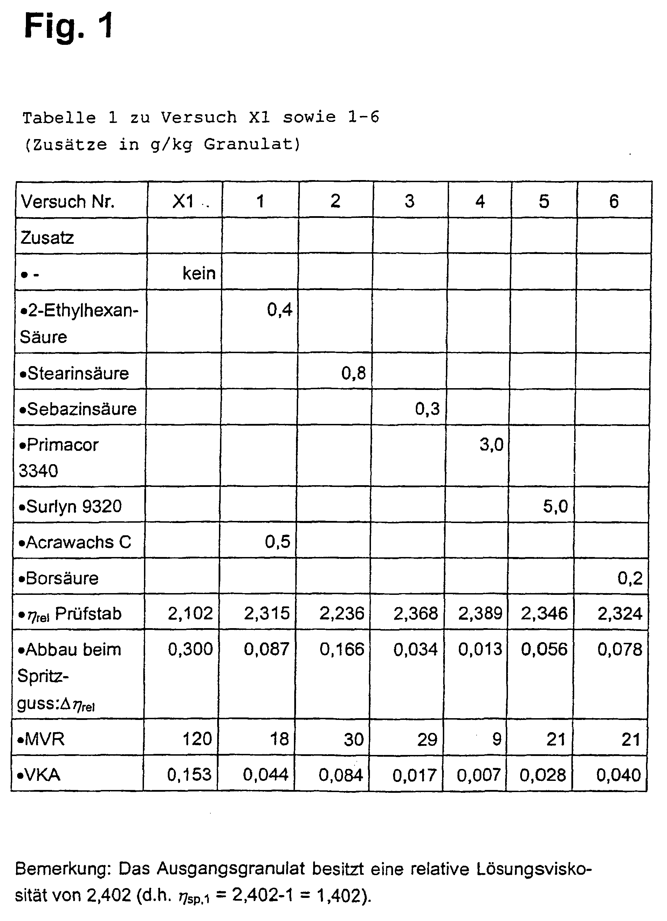

Die Ergebnisse sind in Fig. 1 (Tabelle 1) zusammengefasst, wobei jeweils mit X bezeichnete Versuche Vergleichsversuche sind.

Sie zeigen, wie durch die Verwendung der erfindungsgemäßen Desaktivatoren, die vor der Spritzgussverarbeitung lediglich aufs Granulat aufgebracht sind, der Abbau beim Aufschmelzen mit Verarbeitung im Spritzguss sehr wesentlich reduziert ist.

Im Versuch X1, wo reines, anionisch polymerisiertes Granulat identisch zu Prüfkörpern verarbeitet wurde, erfolgte ein sehr viel deutlicherer Viskositätsabbau. Auch die gemessenen Volumenschmelzindexwerte bestätigen den deutlichen Abbau beim Wiederaufschmelzen von anionisch polymerisiertem PA12 Granulat beim Vergleichsversuch X1, wo kein Zusatz mitverwendet wurde. Gleichzeitig belegen die tiefen MVR-Messwerte von Versuch 1-6, dass nur noch ein geringer Abbau beim Aufschmelzen eintritt, wenn bei der Spritzgussverarbeitung erfindungsgemässe Zusätze in die Schmelze eingemischt sind.

Die folgenden Versuche beschreiben die kontinuierliche Herstellung von erfindungsgemässem, anionisch polymerisiertem Polyamidgranulat von hoher Stabilität in der Schmelze bzgl. Viskositätsabbau.

Dieses neuartige Polyamidgranulat lässt sich hervorragend über den Schmelzezustand in thermoplastischen Umformprozessen wie Spritzguss und Extrusion zu Rohren, Filmen und Ummantelungen von hohem Gebrauchswert verarbeiten.

Die nach den neuartigen Prozessen hergestellten Polyamidgranulate besitzen bisher nicht gekannte Eigenschaftskombinationen, so dass daraus hergestellte Gebrauchsgegenstände neben guter Hitzestabilität sehr gut bewitterungsstabil sind und eine ausserordentlich hohe Hydrolysestabilität in wässrigen Medien aufweisen. Daraus hergestellte Rohre besitzen beispielsweise eine bisher nicht gekannte Kältezähigkeit und Beständigkeit gegen Innendruck selbst bei Temperaturen bis 130°C.

Zur Herstellung der erfindungsgemässen Polyamide in Granulatform kann beispielsweise zweistufig geawbeitet werden, indem man z.B. in einem ersten Extrusionsdurchgang wie bei Versuch 1-6 vorgeht und dabei Laurinlactam mit Hilfe eines Flüssigkatalysators gemäss DE 197 15 679 zum Polylaurinlactam umsetzt.

In einem zweiten Extrusionsdurchgang werden dann die den Katalysator zerstörenden Komponenten, die oft gleichzeitig die geforderten Zusatzaufgaben übernehmen können, zugefügt.

Der Desaktivator wird dabei bevorzugt unter schonenden Bedingungen und intensiver Mischwirkung gemeinsam mit dem in der ersten Verfahrensstufe hergestellten Polylactamgranulat aufgeschmolzen, so dass er rasch seine Wirkung entfaltet indem er insbesondere die starke Basizität der Schmelze aufhebt. Weitere Komponenten der für die Praxisanwendung notwendigen Formulierung wie Stabilisatoren, Weichmacher, Farbstoffe, wie Russ und weitere, notwendige Komponenten können auch in einem späteren Stadium des Extrusionsprozesses z.B. direkt in die Schmelze eingetragen bzw. bei Flüssigkeiten, wie Weichmachern, direkt in die Schmelze eingespritzt werden.

Alternativ lässt sich der Prozess jedoch auch im 1-Stufenverfahren durchführen, indem bei geeigneter Auslegung des Extruders in einem ersten Verfahrensschritt die kontinuierliche Umsetzung des Lactams zum Polylactam, bevorzugt mit Hilfe eines Flüssigkatalysators erfolgt, sodann mit Hilfe des die Katalysatoraktivität aufhebenden Desaktivators die Schmelze gegen Viskositätsänderung stabilisiert wird und man gleichzeitig oder nachfolgend weitere Bestandteile der Endrezeptur zufügt und sodann einmischt, dann die Schmelze als Strang austrägt, kühlt und den erstarrten Strang granuliert, so dass nach Trocknung ein verarbeitungsfertiges Granulat vorliegt, oder die Schmelze auch direkt der Formgebung in einem Werkzeug zugeführt wird.

Das einstufige Herstellungsverfahren benötigt übrigens nur eine mittlere Verweilzeit von ca. 2 Minuten, die Desaktivierung in der zweiten Extruderzone inbegriffen. Darin zeigt sich die hohe Wirtschaftlichkeit, wenn man bedenkt, dass für die hydrolytische Herstellung von Polylactam mehrere Stunden erforderlich sind.

Die Verfahrensbedingungen sind prinzipiell in einem weiten Bereich variierbar.

Bevorzugt geht man jedoch so vor, dass die Polymerisationszeit bei den gewählten Einstellbedingungen des Extruders, wie Temperierung der Heizzonen und Drehzahl, gerade ausreicht um 99-99,8 Gew.-% des Lactams-12 umzusetzen und man danach den Katalysator durch Zufügen des Desaktivators deaktiviert. Im Falle von Lactam-6 polymerisiert man bevorzugt in den bekannten, temperaturabhängigen Bereich des Monomer/Polymer Gleichgewichts.

Benützt man dabei den Prozess mit 2 Extrusionsdurchgängen, kann dies durch geeignete Anpassung von Temperaturführung Durchsatz und Drehzahl leicht erreicht werden.

**Vergleichsversuch X3**, **X4, und X5 sowie Beispiele 10-15**

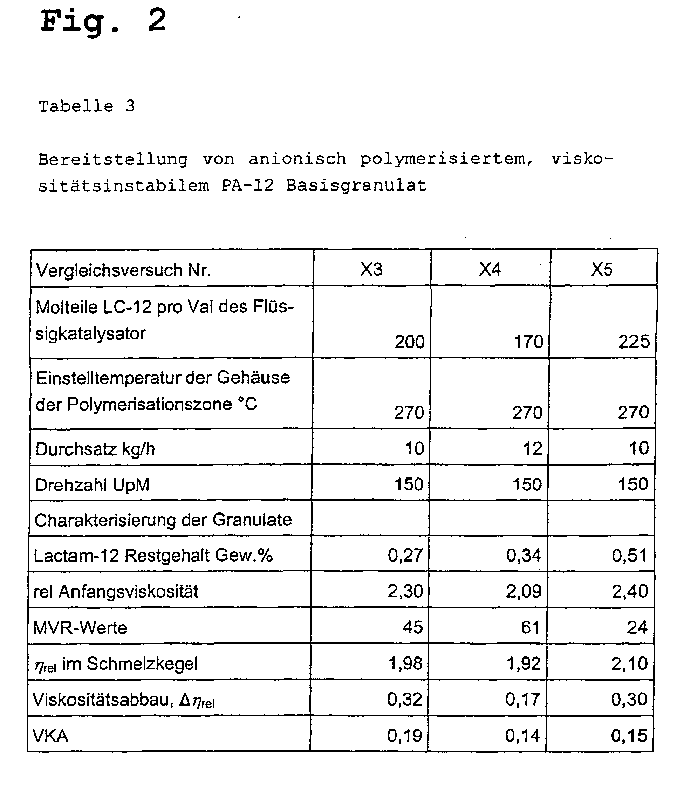

Unter erneuter Verwendung des Doppelwellenextruders, ZSK-25, wurden wieder unter Verwendung der üblichen Compoundierschnecke ausgehend von Laurinlactam und Flüssigkatalysator Polyamid-12 Granulate hergestellt.
Die Versuchsbedingungen und die Versuchsergebnisse der Vergleichsversuche sind in Fig. 2 (Tabelle 3) zusammengestellt.
Wie die Analyseergebnisse zeigen, bewirkt das reine Aufschmelzen mit lediglich einem Durchlauf durch das MVR-Gerät einen beträchtlichen Viskositätsabbau.

**Versuch 10-15**

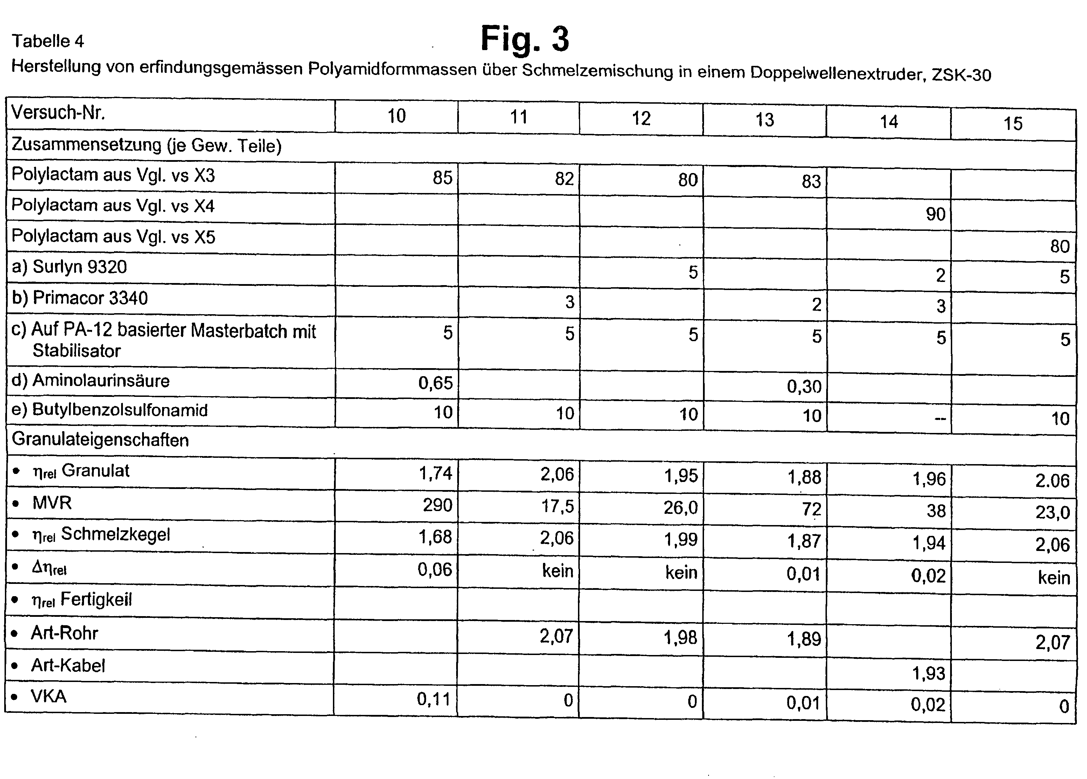

Die im Vergleichsversuch X3-X5 hergestellten, noch viskositätsinstabilen PA-12 Basisgranulate wurden nun mit den Desaktivatoren gemäss Fig. 3 (Tabelle 4) vorgemischt und die Substanzgemische sodann auf einem Doppelwellenextruder ZSK-30, ausgerüstet mit einer Compoundierschnecke, schonend aufgeschmolzen, so dass die Desaktivatoren ihre Wirkung einer Katalysatordeaktivierung und Modifikation der Schmelze ausüben können, wobei flüssige Zusätze, insbesondere Weichmacher, in einem späteren Stadium der Compoundierung direkt in die Schmelze eingespritzt wurden. Die Schmelze, die nun die Katalysatorreste in desaktivierter Form sowie weitere Zusätze homogen eingemischt enthält, wird sodann über eine Düse in ein wässriges Kühlbad eingetragen, der erstarrte Strang granuliert und die Granulate getrocknet, wonach ein verarbeitungsfertiges, verarbeitungsstabiles Granulat vorliegt. Dieses kann, abhängig von der Formulierung, zu weichgemachten PA-12 Rohren, zu Spritzgussteilen, zu Ummantelungen von Kabeln, zu Folien und zu Beschichtungen über Thermoplastprozesse verarbeitet werden, ohne dass Abbau eintritt und wobei Fertigteile mit hervorragenden Eigenschaften resultieren. Die Rezepturen und Eigenschaften der erfindungsgemässen PA-12 Formmassen sind in Fig. 3 zusammengestellt.
Die Messung der $\eta_{rel}$-Werte belegt eindrücklich, dass sowohl bei der MVR-Messung als auch bei der Verarbeitung zu Rohren und zu Kabelummantelungen die neuartigen Polyamide beim Wiederaufschmelzen viskositätsstabil sind.

**Versuch 16-19**

Bei diesen Versuchen wurden Ziele wie folgt angestrebt:

1. In einem Extrusionsdurchgang hat die Polymerisation und die Compoundierung zu erfolgen

2. Während der Compoundierung sollten wirksame Hitze- und Bewitterungsstabilisatoren in die Schmelze eingearbeitet werden.

3. Das Verhalten der Prüfkörper aus erfindungsgemässen Polyamidformmassen bei Hitze und Lichteinwirkung sollte im Vergleichstest überprüft werden.

Dazu wurde der bereits bei den früheren Polymerisationsversuchen verwendete Extruder, ZSK-25, eingesetzt, aber das Schneckenpaar so modifiziert, dass ca. im ersten Drittel der Einzug und das Aufschmelzen der Lactam-12-Pillen erfolgte, sodann der bereits früher beschriebene Flüssigkatalysator kontinuierlich in die Schmelze eindosiert wurde, sodann im zweiten Drittel des Extruders die Polymerisation des Lactams ablief, die Extruderwellen danach mit Elementen bestückt waren, die ein Rückströmen viskoser Schmelze verhindern, nachfolgend, im letzten Drittel der Desaktivator und die Stabilisatoren über einen sogenannten "Side-feeder" in die Schmelze dosiert und danach homogen eingemischt wurden, und man die Schmelze danach als Strang abzog, diesen granulierte und das Granulat auf einen verarbeitungsgeeigneten Wassergehalt von tiefer als 0,15 Gew.-% trocknete.
In der Polymerisationszone wurden folgende Bedingungen eingehalten:

- es wurde 1 Moläquivalent Flüssig-Katalysator pro 200 Teile Lactam-12 kontinuierlich zugefügt
- die Extrudergehäuse ab Einspritzen des Katalysators wurden auf 290°C eingestellt
- die Drehzahl wurde auf 200 UpM bei einem totalen Massedurchsatz von 14 kg/h festgelegt.

Die Temperaturerhöhung auf 290°C erfolgte um den Umsatz zu beschleunigen, weil bei dieser Versuchsführung nur 1/3-Extruderlänge für die Polymerisation zur Verfügung stand.

Um die Gesamtmenge der Additive, die via Side-feeder in die Schmelze dosiert wurden, auf mindestens 5 Gew.-% zu erhöhen, wurde zum Teil anionisch polymerisiertes PA12-Granulat (PA12, A) aus früheren Versuchen gemeinsam mit den Rezepturkomponenten in die Schmelze dosiert.

Für alle Versuche (auch X6) wurde folgende Kombination an Stabilisatoren verwendet: 0,3 Gew.-% Irganox 245, 0,15 Gew.-% Irganox P-EPQ (=Stabilisatoren von Ciba, SC, Basel) sowie 0,5 Gew.-% Nylostab S-EED (=Stabilisator von Clariant).

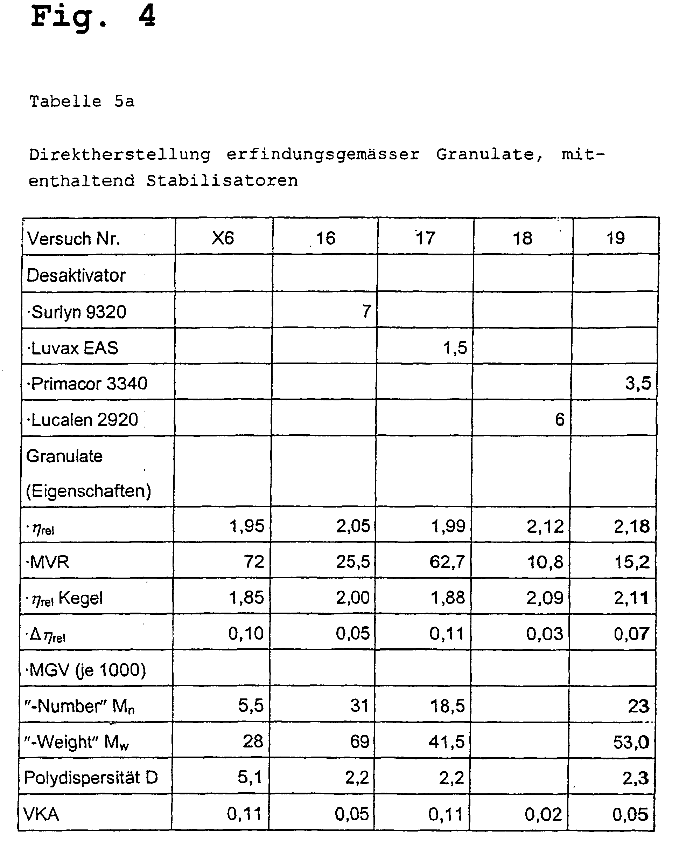

Die zugefügten Desaktivatoren sind in Fig. 4 (Tabelle 5a) dargestellt. Dabei stellt Versuch X6 wieder einen Vergleichsversuch dar, bei dessen Herstellung kein Desaktivator im engeren Sinn zugesetzt wurde.

An den Granulaten wurde die relative Viskosität $\eta_{rel}$, der MVR sowie nachfolgend erneut $\eta_{rel}$ in der Schmelzkegelprobe bestimmt. Die Differenz $\Delta\eta_{rel}$ der beiden relativen Viskositäten enspricht dem Abbau beim Aufschmelzen, der aber vom Ausgangswert abhängig ist. Die Erfinder haben jedoch den überraschend einfachen empirischen Ansatz gefunden, dass der nach der Formel VKA = $\Delta\eta_{rel}$ / $(\eta_{sp,1})^2$ berechnete $\underline{v}$iskositäts$\underline{k}$orrigierte $\underline{A}$bbau für eine bestimmte Materialzusammensetzung unabhängig vom Anfangswert der relativen Viskosität näherungsweise konstant bleibt (wobei $\eta_{sp,1}$ die spezifische Viskosität vor dem Aufschmelzen ist, mit $\eta_{sp} = \eta_{rel}-1$). Dank dieser Erkenntnis ist VKA eine charakteristische Grösse für die Beurteilung der Abbaustabilität des Polyamids. Ergänzend wurde die Molekulargewichtsverteilung gemessen.

Ferner wurden aus den Granulaten DIN-Schlagzugstäbe gespritzt und diese einem Hitzetest bei 150 °C unterworfen. Ebenfalls wurde ein Schnellbewitterungstest in einem Wether-0-Meter Gerät durchgeführt.

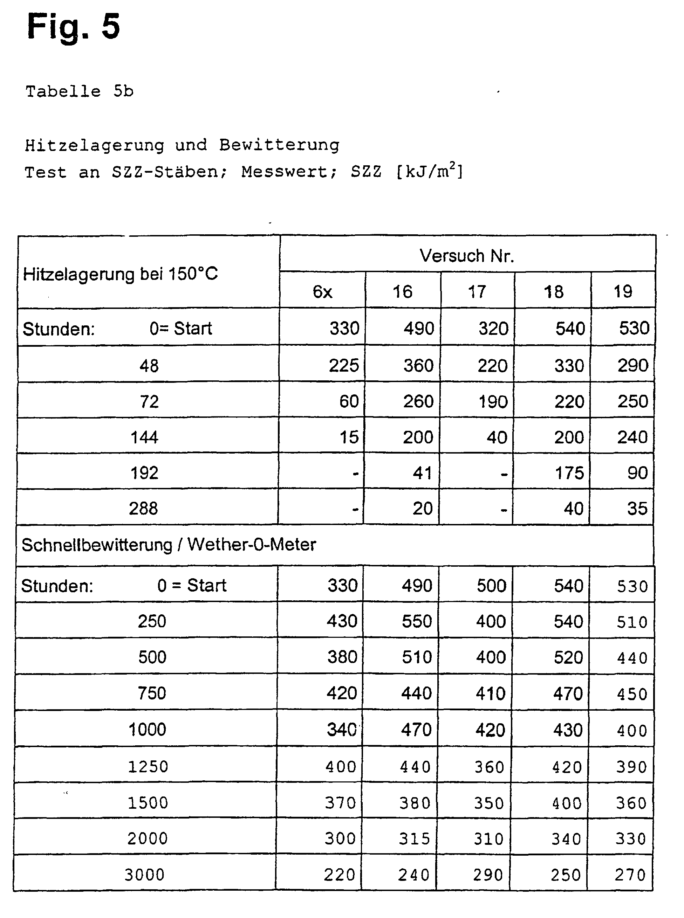

Die Ergebnisse all dieser Tests sind in Fig. 5 (Tabelle 5b) enthalten.

Bei der Beurteilung der Versuche zu Tabelle 5b ist zu berücksichtigen, dass bei Vergleichsversuch X6 die verwendeten Stabilisatoren bereits zu einem Teil desaktivierend auf den Katalysator wirken, so dass der Viskositätsabbau im MVR-Test geringer ausfällt als bei entsprechenden Messungen an reinem, anionisch polymerisiertem Granulat.

Interessant sind die MGV-Messungen. Zu berücksichtigen ist, dass die Polymerisationsbedingungen auf dem Extruder so gewählt wurden, dass nach 2/3-Extruderlänge die Polymerisation im wesentlichen abgeschlossen ist.

Bei Versuch X6, wo die Katalysatoraktivität mindestens teilweise erhalten bleibt, resultierte eine breitere MG-Verteilung, und es entstehen insbesondere viele kurzkettige Molekülfragmente.

Bei den Versuchen 16-19 hingegen wird die Wirksamkeit des Katalysators durch den Desaktivator je vollständig gestoppt und die Molekulargewichte bleiben hoch mit einem D-Wert nahe bei 2, wie er auch bei hydrolytisch hergestelltem Polyamid üblich ist.

Bei den Versuchen 16-19 sind die Ergebnisse dort etwas schlechter, wo die niedermolekulare Verbindung Luvax EAS (EAS=Ethylen-Acrylsäure) verwendet wurde.

Besonders gut sind sie bei Versuch 16, 18 und 19, wo hochmolekulare, saure Verbindungen als Desaktivator verwendet werden.

Die Wirkung des höheren Molekulargewichts dieser Verbindungen zeigt sich auch im Hitzetest bei 150°C, wo die Variante X ohne Desaktivator bereits nach 72 Stunden ausfällt, gefolgt von der Variante mit Luvax EAS, während sodann bei den Versuchen mit hochmolekularem Desaktivator erst nach 8 Tagen ein wesentlicher Festigkeitsabfall eingetreten ist.

Bei der Schnellbewitterung im Wether-0-Meter, zeigen alle Varianten bis 2000 h ein aussergewöhnlich gutes Verhalten.

Bezüglich des Niveaus der SZZ-Werte ist folgender wesentlicher Zusammenhang zu berücksichtigen:

Das im Flüssigkatalysator mitenthaltene Solvatisierungsmittel wirkt stark zähigkeitserhöhend, so dass auch Fertigteile basierend auf mit Flüssigkatalysator polymerisiertem Lactam-12 eine hohe Zähigkeit und Bruchfestigkeit besitzen. Werden solche Teile nun extremer Hitzeeinwirkung, z. B. einem Hitzetest bei 150°C, ausgesetzt, so verflüchtigt sich zunächst das Solvatisierungsmittel des verwendeten Flüssigkatalysators, und die Schlagzugzähigkeit fällt auf das übliche Niveau von PA12 ab, wie es für hydrolytisch hergestelltes PA12 bekannt ist. Dieses relevante Plateau bleibt sodann solange erhalten, bis die Wirksamkeit der Stabilisatorkombination nachlässt. Die bei PA12 hydrolytisch übliche Halbwertszeitregel darf daher für die Beurteilung der Hitzebeständigkeit nicht angewendet werden, sondern das erreichte Niveau der Zähigkeit nach Ausdampfen des Solvatisierungsmittels z.B. nach 48h Hitzeeinwirkung muss als Basis für den späteren Festigkeitsabfall gewählt werden.

## Versuche 20-24

Die Versuche 20-24 betreffen die weitere Überprüfung von Desaktivatoren von anionischen Katalysatoren für die Polymerisation von Lactam.

Dazu wurde als erste Stufe unter schonenden Bedingungen mit einer einfachen Compoundierschnecke auf der ZSK-25 in einem Extrusionsdurchgang anionisch polymerisiertes PA12-Granulat ohne Zusätze hergestellt.

Dabei wurde bei einer Temperatureinstellung der Gehäuse von je 260°C, einer Drehzahl von 150 UpM sowie einem Durchsatz von 13 kg/h bei einem Katalysator zu LC-12 Molverhältnis von 1:125 polymerisiert.

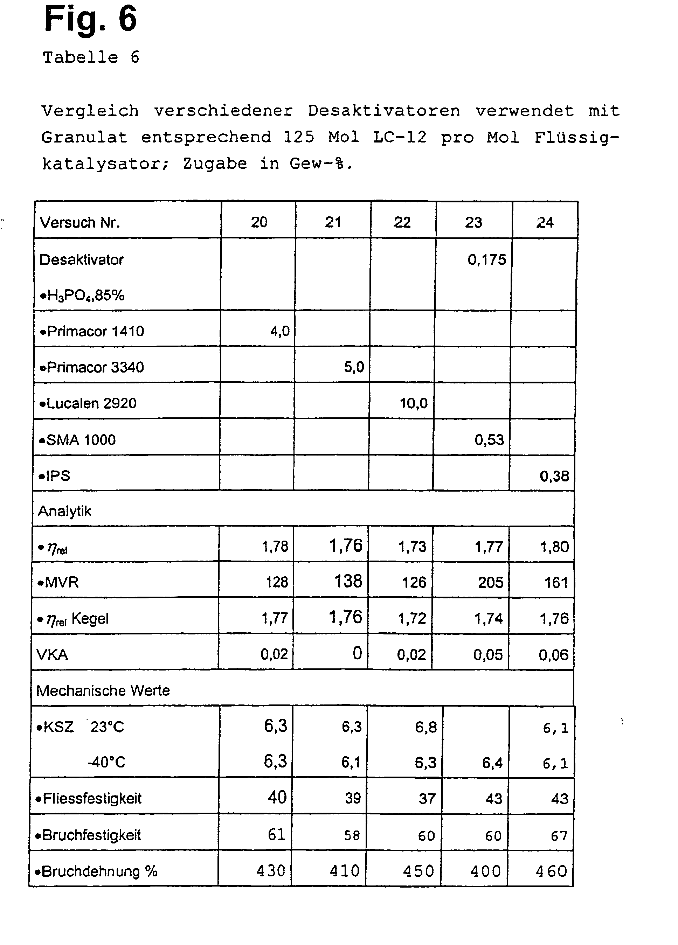

Dieses Granulat wurde sodann wie bereits früher beschrieben, auf einer ZSK-30 mit Verbindungen gemäss Fig. 6 (Tabelle 6) reextrudiert. Dabei wurden die Desaktivatoren gemeinsam mit dem Basisgranulat dem Extruder zugeführt und aufgeschmolzen, so dass sie von Anfang an ihre deaktivierende Wirkung ausüben konnten.

Die verwendeten Zusätze und die die Viskosität der Schmelzen stabilisierende Wirkung der Desaktivatoren ist anhand von $\eta_{rel}$ und MVR-Messungen in Tabelle 6 dargestellt.

Wie die gemessenen, mechanischen Werte an im Spritzguss-Verfahren hergestellten Prüfkörpern ergänzend belegen, resultieren auf Basis der erfindungsgemässen PA12-Granulate trotz des vergleichsweise niederen Molekulargewichts Prüfkörper mit hervorragenden mechanischen Eigenschaften.

**Patentansprüche**

1. Polyamid mit geringem Viskositätsabbau nach Wiederaufschmelzung, herstellbar durch anionische Polymerisation von Lactam in Gegenwart von alkalischen Katalysatoren und gegebenenfalls Aktivatoren,
   **dadurch gekennzeichnet,**
   **daß** das Polyamid eine protische Verbindung als Desaktivator ausgewählt aus aus organischen Carbonsäuren in, oligomerer oder polymerer Form und/oder Säuren des Phosphors und Bors wobei die protische Verbindung mindestens in einem Restanteil von 1 % des Ausgangswertes noch in ihrer protischen Form vorliegt, enthält und eine relative Viskosität ($\eta_{rel}$) von $\geq 1,55$ gemessen an einer 0,5 Gew.-%igen Lösung in m-Kresol nach EN ISO 307 sowie beim Wiederaufschmelzen bei. 275°C und einem Wassergehalt von unter 0,15 Gew.-% einen viskositäts-korrigierten Abbau

$$VKA = \frac{\Delta\eta_{rel}}{(\eta_{sp,1})^2} \text{ von} \leq 0,13$$

   aufweist.

2. Polyamid nach Anspruch 1, **dadurch gekennzeichnet, daß** es eine Polydispersität D $\leq$ 5,0 aufweist.

3. Polyamid nach Anspruch 1 oder 2, **dadurch gekennzeichnet, daß** der VKA $\leq$ 0,10 ist.

4. Polyamid nach mindestens einem der Ansprüche 1 bis 3, **dadurch gekennzeichnet, daß** die $\eta_{rel} \geq 1, 7$ ist.

5. Polyamid nach einem des Anspruch 1-4, **dadurch gekennzeichnet, daß** die organische Carbonsäure in Form eines oligomeren wachsartigen Produktes, bevorzugt als Polyäthylenwachs, der saure Comonomere wie (Meth) acrylsäure enthält oder als Copolymeres hiervon vorliegt, oder ein Polyamidoligomer mit COOH-Gruppen darstellt.

6. Polyamid nach Anspruch 5, **dadurch gekennzeichnet, daß** das Copolymer ein Äthylen(meth)acrylsäurecopolymer ist.

7. Polyamid nach mindestens einem der Ansprüche 5 oder 6, **dadurch gekennzeichnet, daß** die Carbonsäure ein Copolymer mit Säuregruppen enthaltenden Monomeren ist, die partiell als Salz vorliegen (Ionomere).

8. Polyamid nach Anspruch 7, **dadurch gekennzeichnet, daß** es sich um Copolymere des Ethylen handelt, wobei sich die Salze von den Elementen Li, Na, K, Ca, Mg und/oder Zn ableiten.

9. Polyamid nach mindestens einem der Ansprüche 1 bis 8, **dadurch gekennzeichnet, daß** das Lactam ausgewählt ist aus Lactamen mit 5 bis 12 C-Atomen, bevorzugt Lactam-6 und Lactam-12 oder deren Gemisch.

10. Polyamid nach mindestens einem der Ansprüche 1 bis 9, **dadurch gekennzeichnet, daß** der Katalysator ein Metall-Lactamat bzw. eine Lactamat bildende Verbindung ist.

11. Polyamid nach mindestens einem der Ansprüche 1 bis 10, **dadurch gekennzeichnet, daß** der Aktivator ausgewählt ist aus acylierten Lactamen, Isocyanat und/oder Carbodiimid, die auch in verkappter oder cyclisierter Form vorliegen können.

**12.** Polyamid nach mindestens einem der Ansprüche 1 bis 11, **dadurch gekennzeichnet, daß** der Katalysator ein katalytisch wirkendes Flüssigsystem ist, das den Aktivator und den Katalysator in einem flüssigen polaren aprotischen Solvatisierungsmittel enthält.

**13.** Polyamid nach mindestens einem der Ansprüche 1 bis 12, **dadurch gekennzeichnet, daß** es in Form eines Granulates vorliegt.

**14.** Polyamid nach mindestens einem der Ansprüche 1 bis 12, **dadurch gekennzeichnet, daß** es in Form von Fasern, Folien, Platten, Rohren, Ummantelungen, Form- und Profilstücken und dergleichen vorliegt.

**15.** Verfahren zum Herstellen von Polyamid mit geringem Viskositätsabbau nach Wiederaufschmelzung aus Lactam in Gegenwart von alkalischen Katalysatoren und gegebenenfalls Aktivatoren in einem Extruder, **dadurch gekennzeichnet, daß** im Extruder in einem ersten Schritt a) die Lactamschmelze mit dem Katalysator bei einer Temperatur von 140-320°C solange umgesetzt wird, bis ein Lactamumsatz von mindestens 90 % erreicht ist und daß dann in einem Schritt b) eine protische Verbindung als Desaktivator ausgewählt aus organischen Carbonsäuren in niedermolekularer oder polymerer Form und/oder aus Säuren des Phosphors und/oder Bors zugesetzt wird, wobei die sauren Gruppen des Desaktivators in einer im Verhältnis zur Konzentration des Katalysators mindestens äquimolaren Konzentration vorhanden sind.

**16.** Verfahren nach Anspruch 15, **dadurch gekennzeichnet, daß** die Temperatur im Verfahrensschritt a) 140-300 °C, bevorzugt 140-280 °C beträgt.

**17.** Verfahren nach Anspruch 15 oder 16, **dadurch gekennzeichnet, daß** beim Schritt a) die Umsetzung bis zu einem Lactamumsatz von mindestens 99 % geführt wird.

**18.** Verfahren nach mindestens einem der Ansprüche 15 bis 17, **dadurch gekennzeichnet, daß** die Herstellung in einem Extrusionsdurchgang erfolgt.

**19.** Verfahren nach mindestens einem der Ansprüche 15 oder 18, **dadurch gekennzeichnet, daß** mindestens zwei Extrusionsdurchgänge erfolgen, wobei der erste Extrusionsdurchgang der Polymerisation und der zweite Durchgang insbesondere der Desaktivierung des Katalysators dient.

**20.** Verfahren nach Anspruch 18 oder 19, **dadurch gekennzeichnet, daß** Doppelwellenextruder verwendet werden.

**21.** Verfahren nach Anspruch 20, **dadurch gekennzeichnet, daß** Doppelwellenextruder mit gleichläufigen Schnecken eingesetzt werden.

**22.** Verfahren nach mindestens einem der Ansprüche 15 bis 21, **dadurch gekennzeichnet, daß** der Desaktivator homogen eingemischt wird.

**23.** Verfahren nach mindestens einem der Ansprüche 15 bis 22, **dadurch gekennzeichnet, daß** als Lactam ein Lactam mit 5-12 C-Atomen, bevorzugt mit 6 und 12 C-Atomen oder deren Gemisch eingesetzt wird.

**24.** Verfahren nach mindestens einem der Ansprüche 15 bis 23, **dadurch gekennzeichnet, daß** zur Auslösung der Lactampolymerisation ein katalytisch wirkendes Flüssigsystem eingesetzt wird, das den Aktivator und den Katalysator in einem flüssigen polaren aprotischen Solvatisierungsmittel enthält.

**25.** Verfahren nach Anspruch 24, **dadurch gekennzeichnet, daß** das Flüssigsystem bei Beginn des Schrittes a) homogen in die Lactamschmelze eingemischt wird.

**26.** Verfahren zum Wiederaufbereiten von Polyamid hergestellt aus Lactam in Gegenwart von alkalischen Katalysatoren und gegebenenfalls Aktivatoren, **dadurch gekennzeichnet, daß** das Polyamid zerkleinert und mit einem Desaktivator vermischt wird, wobei der Desaktivator in einer Menge zugesetzt wird mit der mindestens die noch vom Katalysatorsystem vorhandene Basizität aufgehoben wird, daß anschließend das Gemisch gegebenenfalls unter Zusatz von Hilfsstoffen aufgeschmolzen und abschließend extrudiert wird.

**27.** Verfahren nach Anspruch 26, **dadurch gekennzeichnet, daß** das Aufschmelzen und Extrudieren in einem Doppelwellenextruder.durchgeführt wird.

**28.** Verfahren nach Anspruch 27, **dadurch gekennzeichnet, daß** Doppelwellenextruder mit gleichläufigen Schnecken eingesetzt werden.

**29.** Verfahren nach mindestens einem der Ansprüche 26 bis 28, **dadurch gekennzeichnet, daß** der Desaktivator ausgewählt ist aus organischen Carbonsäuren in niedermolekularer oder polymerer Form und/oder aus Säuren des Phosphors und/oder Bors.

**30.** Verfahren nach mindestens einem der Ansprüche 26 bis 29, **dadurch gekennzeichnet, daß** der Desaktivator homogen eingemischt wird.

**31.** Verfahren nach mindestens einem der Ansprüche 26 bis 30, **dadurch gekennzeichnet, daß** als Polyamid Endlosfasergebilde, die von Polyamid umhüllt sind und Faserverbundwerkstoffe darstellen, eingesetzt werden.

**Claims**

**1.** Polyamide with low viscosity decomposition after re-melting, producible by anionic polymerisation of lactam in the presence of alkaline catalysts and, if appropriate, activators,
**characterised in that**
the polyamide contains a protic compound as deactivator, selected from organic carboxylic acids in oligomer or polymer form and/or acids of phosphorus and boron with the protic compound still present in its protic form at least in a residual proportion of 1% of the initial value, with a relative viscosity ($\eta_{rel}$) of $\geq 1.55$ as measured on a 0.5 weight-% solution in m-cresol according to EN ISO 307 and during re-melting at 275°C and a water content of below 0.15 weight-% a viscosity corrected decomposition

$$VKA = \frac{\Delta \eta_{rel}}{(\eta_{sp,1})^2} \text{ of } \leq 0.13.$$

**2.** Polyamide according to Claim 1, **characterised in that** it has a polydispersity $D \leq 5.0$.

**3.** Polyamide according to Claim 1 or 2, **characterised in that** the VKA $\leq 0.10$.

**4.** Polyamide according to at least one of Claims 1 to 3, **characterised in that** $\eta_{rel} \geq 1,7$.

**5.** Polyamide according to one of Claims 1 to 4, **characterised in that** the organic carboxylic acid is present in the form of an oligomer waxlike product, preferably as polyethylene wax containing sour comonomers such as (meth) acrylic acid or as a copolymer thereof, or it represents a polyamide oligomer with COOH-groups.

**6.** Polyamide according to Claim 5, **characterised in that** the copolymer is an ethylene (meth)acrylic acid copolymer.

**7.** Polyamide according to at least one of Claims 5 or 6, **characterised in that** the carboxylic acid is a copolymer containing monomers with acid groups, partially present as salt (ionomere).

**8.** Polyamide according to Claim 7, **characterised in that** they are copolymers of ethylene, and the salts are derived from the elements Li, Na, K, Ca, Mg and/or Zn.

**9.** Polyamide according to at least one of Claims 1 to 8, **characterised in that** the lactam is selected from lactams with between 5 and 12 C-atoms, preferably lactam-6 and lactam-12 or a mixture thereof.

**10.** Polyamide according to at least one of Claims 1 to 9, **characterised in that** the catalyst is a metal lactamate or a lactamate forming compound.

**11.** Polyamide according to at least one of Claims 1 to 10, **characterised in that** the activator is selected from acrylated lactams, isocyanates and/or carbodi imide, which can also be present in capped or cyclisised form.

**12.** Polyamide according to at least one of Claims 1 to 11, **characterised in that** the catalyst is a catalytically active fluid system which contains the activator and the catalyst in a liquid polar aprotic solvatising means.

**13.** Polyamide according to at least one of Claims 1 to 12, **characterised in that** it is present in the form of a granulate.

**14.** Polyamide according to at least one of Claims 1 to 12, **characterised in that** it is present in the form of fibres, foils, plates, pipes, casings, shaped and profiled pieces and the like.

**15.** Process for producing polyamide with low viscosity decomposition after remelting from lactam in the presence of alkalic catalysts and, if appropriate, activators in an extruder, **characterised in that** in the extruder the lactam melt is converted in a first step a) with the catalyst at a temperature of between 140 and 320°C until a lactam conversion of at least 90% is arrived at, whereafter a protic compound as deactivator is in a step b) selected from organic carboxylic acids in low-molecular or polymer form and/or of acids of phosphorus and/or boron is added, and the acidic groups of the deactivator are present relative to the concentration of the catalyst in an at least equimolar concentration.

**16.** Process according to Claim 15, **characterised in that** the temperature in procedural step a) lies between 140 and 300°C, preferably between 140 and 280°.

**17.** Process according to Claim 15 or 16, **characterised in that** in step a) the conversion is conducted up to a lactam conversion of at least 99%.

**18.** Process according to at least one of Claims 15 to 17, **characterised in that** the production is carried out in an extrusion process.

**19.** Process according to at least one of Claims 15 or 18, **characterised in that** at least two extrusion processes are carried out, and the first extrusion process serves the polymerisation, and the second process serves in particular the deactivation of the catalyst.

**20.** Process according to Claim 18 or 19, **characterised in that** double-shaft extruders are used.

**21.** Process according to Claim 20, **characterised in that** double shaft extruders with synchronised wormdrives are used.

**22.** Process according to at least one of Claims 15 to 21, **characterised in that** the deactivator is homogenously mixed in.

**23.** Process according to at least one of Claims 15 to 22, **characterised in that** as lactam is used a lactam with 5 - 12 C-atoms, preferably with 6 and 12 C-atoms, or a mixture thereof.

**24.** Process according to at least one of Claims 15 to 23, **characterised in that** for triggering the lactam polymerisation a catalytically active fluid system is used which contains the activator and the catalyst in a fluid polar aprotic solvatising means.

**25.** Process according to Claim 24, **characterised in that** the fluid system is at the start of step a) homogenously mixed into the lactam melt.

**26.** Process of regenerating polyamide made of lactam in the presence of alkaline catalysts and, if appropriate, activators, **characterised in that** the polyamide is reduced is mixed with a deactivator, and the deactivator is added at a volume by means of which basicity present in the catalyst system is at least balanced out, and thereafter the mixture is, if appropriate with addition of auxiliary materials, melted and then extruded.

**27.** Process according to Claim 26, **characterised in that** melting and extruding is carried out in a double shaft extruder.

**28.** Process according to Claim 27, **characterised in that** double shaft extruders with synchronised wormdrives are used.

**29.** Process according to at least one of Claims 26 to 28, **characterised in that** the deactivator is selected from organic carboxylic acids in low molecular or polymer form and/or of acids of phosphorus and/or boron.

**30.** Process according to at least one of Claims 28 to 29, **characterised in that** the deactivator is homogenously mixed in.

31. Process according to at least one of Claims 26 to 30, **characterised in that** as polyamide are used continuous fibre structures which are encased by polyamide and represent fibre composite materials.

**Revendications**

1. Polyamide à faible diminution de viscosité après refusion, pouvant être préparé par polymérisation anionique de lactame en présence de catalyseurs alcalins et éventuellement d'activateurs, **caractérisé en ce que** le polyamide contient, en tant qu'inactivateur, un composé protique choisi parmi des acides carboxyliques organiques sous forme oligomère ou polymère et/ou des acides du phosphore et du bore, le composé protique étant encore présent sous sa forme protique au moins en une proportion résiduelle de 1 % de la valeur initiale, et le polyamide présente une viscosité relative ($\eta_{rel}$) de $\geq 1,55$, mesurée sur une solution à 0,5 % en poids dans du m-crésol selon EN ISO 307, ainsi que, lors de la refusion à 275°C et à une teneur en eau de moins de 0,15 % en poids, une diminution corrigée de la viscosité (VKA)

$$\text{VKA} = \frac{\Delta\eta_{rel}}{\left(\eta_{sp,1}\right)^2} \leq 0,13.$$

2. Polyamide selon la revendication 1, **caractérisé en ce qu'**il présente une polydispersité $D \leq 5,0$.

3. Polyamide selon la revendication 1 ou 2, **caractérisé en ce que** la diminution VKA est $\leq 0,10$.

4. Polyamide selon au moins l'une des revendications 1 à 3, **caractérisé en ce que** la viscosité relative $\eta_{rel}$ est $\geq 1,7$.

5. Polyamide selon l'une quelconque des revendications 1 à 4, **caractérisé en ce que** l'acide carboxylique organique est présent sous forme d'un produit cireux oligomère, de préférence sous forme de cire de polyéthylène, qui contient des comonomères acides tels que l'acide (méth)acrylique ou se trouve sous forme de copolymère de ceux-ci, ou représente un oligomère polyamide à groupes COOH.

6. Polyamide selon la revendication 5, **caractérisé en ce que** le copolymère est un copolymère éthylène/acide (méth) acrylique.

7. Polyamide selon au moins l'une des revendications 5 et 6, **caractérisé en ce que** l'acide carboxylique est un copolymère comportant des monomères contenant des groupes acides, qui se trouvent partiellement sous forme de sel (ionomères).

8. Polyamide selon la revendication 7, **caractérisé en ce qu'**il s'agit de copolymères de l'éthylène, dans lesquels les sels dérivent des éléments Li, Na, K, Ca, Mg et/ou Zn.

9. Polyamide selon au moins l'une des revendications 1 à 8, **caractérisé en ce que** le lactame est choisi parmi des lactames ayant de 5 à 12 atomes de carbone, de préférence le lactame 6 ou le lactame 12 ou un mélange de ceux-ci.

10. Polyamide selon au moins l'une des revendications 1 à 9, **caractérisé en ce que** le catalyseur est un lactamate métallique ou un composé formant un lactamate.

11. Polyamide selon au moins l'une des revendications 1 à 10, **caractérisé en ce que** l'activateur est choisi parmi des lactames acylés, un isocyanate et/ou un carbodiimide, qui peuvent également se trouver sous forme coiffée ou cyclisée.

12. Polyamide selon au moins l'une des revendications 1 à 11, **caractérisé en ce que** le catalyseur est un système liquide à activité catalytique, qui contient l'activateur et le catalyseur dans un agent de solvatation aprotique polaire liquide.

13. Polyamide selon au moins l'une des revendications 1 à 12, **caractérisé en ce qu'**il se trouve sous forme d'un produit granulé.

14. Polyamide selon au moins l'une des revendications 1 à 12, **caractérisé en ce qu'**il se trouve sous forme de fibres, feuilles, plaques, tubes, enveloppes, pièces moulées et profilées, et similaires.

15. Procédé pour la préparation d'un polyamide à faible diminution de la viscosité après refusion, à base de lactame, en présence de catalyseurs alcalins et éventuellement d'activateurs, dans une extrudeuse, **caractérisé en ce qu'**on fait réagir dans l'extrudeuse, dans une première étape a) la masse fondue de lactame avec le catalyseur à une température de 140-320°C, jusqu'à l'obtention d'un degré de conversion de lactame d'au moins 90 %, et **en ce qu'**ensuite dans l'étape b) on ajoute en tant qu'inactivateur un composé protique choisi parmi les acides carboxyliques organiques sous forme à faible masse moléculaire ou polymère et/ou parmi les acides du phosphore et/ou du bore, les groupes acides de l'inactivateur étant présents en une quantité au moins équimolaire par rapport à la concentration du catalyseur.

16. Procédé selon la revendication 15, **caractérisé en ce que** la température dans l'étape a) du procédé est dans la plage allant de 140 à 300°C, de préférence de 140 à 280°C.

17. Procédé selon la revendication 15 ou 16, **caractérisé en ce que** dans l'étape a) la réaction est effectuée jusqu'à un degré de conversion du lactame d'au moins 99 %.

18. Procédé selon au moins l'une des revendications 15 à 17, **caractérisé en ce que** la préparation s'effectue dans un passage en extrudeuse.

19. Procédé selon au moins l'une des revendications 15 et 18, **caractérisé en ce qu'**on effectue au moins deux passages en extrudeuse, le premier passage en extrudeuse servant à la polymérisation et le second passage servant en particulier à l'inactivation du catalyseur.

20. Procédé selon la revendication 18 ou 19, **caractérisé en ce qu'**on utilise des extrudeuses double vis.

21. Procédé selon la revendication 20, **caractérisé en ce qu'**on utilise des extrudeuses double vis à vis tournant dans le même sens.

22. Procédé selon au moins l'une des revendications 15 à 21, **caractérisé en ce que** l'inactivateur est mélangé de façon homogène.

23. Procédé selon au moins l'une des revendications 15 à 22, **caractérisé en ce qu'**on utilise en tant que lactame un lactame ayant de 5 à 12 atomes de carbone, de préférence de 6 à 12 atomes de carbone, ou un mélange de ceux-ci.

24. Procédé selon au moins l'une des revendications 15 à 23, **caractérisé en ce que** pour le déclenchement de la polymérisation de lactame on utilise un système liquide à activité catalytique, qui contient l'activateur et le catalyseur dans un agent de solvatation aprotique polaire liquide.

25. Procédé selon la revendication 24, **caractérisé en ce que** le système liquide est mélangé de façon homogène dans la masse fondue de lactame, au début de l'étape a).

26. Procédé pour le recyclage de polyamide préparé à partir de lactame en présence de catalyseurs alcalins et éventuellement d'activateurs, **caractérisé en ce que** le polyamide est fragmenté et mélangé avec un inactivateur, l'inactivateur étant ajouté en une quantité avec laquelle est augmentée au moins la basicité encore présente du système catalytique, et **en ce que** le mélange est ensuite fondu, éventuellement avec addition d'adjuvants, puis extrudé.

27. Procédé selon la revendication 26, **caractérisé en ce que** la fusion et l'extrusion sont effectuées dans une extrudeuse double vis.

28. Procédé selon la revendication 27, **caractérisé en ce qu'**on utilise des extrudeuses double vis à vis tournant dans le même sens.

29. Procédé selon au moins l'une des revendications 26 à 28, **caractérisé en ce que** l'inactivateur est choisi parmi des acides carboxyliques organiques sous forme à faible masse moléculaire ou polymère et/ou parmi les acides du phosphore et/ou du bore.

30. Procédé selon au moins l'une des revendications 26 à 29, **caractérisé en ce que** l'inactivateur est mélangé de façon homogène.

31. Procédé selon au moins l'une des revendications 26 à 30, **caractérisé en ce qu'**on utilise en tant que polyamide des articles en fibres continues qui sont enveloppés de polyamide et représentent des matériaux composites fibreux.

# Fig. 1

Tabelle 1 zu Versuch X1 sowie 1-6
(Zusätze in g/kg Granulat)

| Versuch Nr. | X1 | 1 | 2 | 3 | 4 | 5 | 6 |
|---|---|---|---|---|---|---|---|
| Zusatz | | | | | | | |
| • - | kein | | | | | | |
| •2-Ethylhexan-Säure | | 0,4 | | | | | |
| •Stearinsäure | | | 0,8 | | | | |
| •Sebazinsäure | | | | 0,3 | | | |
| •Primacor 3340 | | | | | 3,0 | | |
| •Surlyn 9320 | | | | | | 5,0 | |
| •Acrawachs C | | 0,5 | | | | | |
| •Borsäure | | | | | | | 0,2 |
| •$\eta_{rel}$ Prüfstab | 2,102 | 2,315 | 2,236 | 2,368 | 2,389 | 2,346 | 2,324 |
| •Abbau beim Spritz-guss:$\Delta\eta_{rel}$ | 0,300 | 0,087 | 0,166 | 0,034 | 0,013 | 0,056 | 0,078 |
| •MVR | 120 | 18 | 30 | 29 | 9 | 21 | 21 |
| •VKA | 0,153 | 0,044 | 0,084 | 0,017 | 0,007 | 0,028 | 0,040 |

Bemerkung: Das Ausgangsgranulat besitzt eine relative Lösungsviskosität von 2,402 (d.h. $\eta_{sp,1}$ = 2,402-1 = 1,402).

# Fig. 2

Tabelle 3

Bereitstellung von anionisch polymerisiertem, viskositätsinstabilem PA-12 Basisgranulat

| Vergleichsversuch Nr. | X3 | X4 | X5 |
|---|---|---|---|
| Molteile LC-12 pro Val des Flüssigkatalysator | 200 | 170 | 225 |
| Einstelltemperatur der Gehäuse der Polymerisationszone °C | 270 | 270 | 270 |
| Durchsatz kg/h | 10 | 12 | 10 |
| Drehzahl UpM | 150 | 150 | 150 |
| Charakterisierung der Granulate | | | |
| Lactam-12 Restgehalt Gew.% | 0,27 | 0,34 | 0,51 |
| rel Anfangsviskosität | 2,30 | 2,09 | 2,40 |
| MVR-Werte | 45 | 61 | 24 |
| $\eta_{rel}$ im Schmelzkegel | 1,98 | 1,92 | 2,10 |
| Viskositätsabbau, $\Delta\eta_{rel}$ | 0,32 | 0,17 | 0,30 |
| VKA | 0,19 | 0,14 | 0,15 |

Tabelle 4

# Fig. 3

Herstellung von erfindungsgemässen Polyamidformmassen über Schmelzemischung in einem Doppelwellenextruder, ZSK-30

| Versuch-Nr. | 10 | 11 | 12 | 13 | 14 | 15 |
|---|---|---|---|---|---|---|
| Zusammensetzung (je Gew. Teile) | | | | | | |
| Polylactam aus Vgl. vs X3 | 85 | 82 | 80 | 83 | | |
| Polylactam aus Vgl. vs X4 | | | | | 90 | |
| Polylactam aus Vgl. vs X5 | | | | | | 80 |
| a) Surlyn 9320 | | | | 5 | 2 | 5 |
| b) Primacor 3340 | | 3 | | 2 | 3 | |
| c) Auf PA-12 basierter Masterbatch mit Stabilisator | 5 | 5 | 5 | 5 | 5 | 5 |
| d) Aminolaurinsäure | 0,65 | | | 0,30 | | |
| e) Butylbenzolsulfonamid | 10 | 10 | 10 | 10 | -- | 10 |
| Granulateigenschaften | | | | | | |
| • $\eta_{rel}$ Granulat | 1,74 | 2,06 | 1,95 | 1,88 | 1,96 | 2,06 |
| • MVR | 290 | 17,5 | 26,0 | 72 | 38 | 23,0 |
| • $\eta_{rel}$ Schmelzkegel | 1,68 | 2,06 | 1,99 | 1,87 | 1,94 | 2,06 |
| • $\Delta\eta_{rel}$ | 0,06 | kein | kein | 0,01 | 0,02 | kein |
| • $\eta_{rel}$ Fertigkeil | | | | | | |
| • Art-Rohr | | 2,07 | 1,98 | 1,89 | | 2,07 |
| • Art-Kabel | | | | | 1,93 | |
| • VKA | 0,11 | 0 | 0 | 0,01 | 0,02 | 0 |

EP 1 249 465 B1

# Fig. 4

Tabelle 5a

Direktherstellung erfindungsgemässer Granulate, mitenthaltend Stabilisatoren

| Versuch Nr. | X6 | 16 | 17 | 18 | 19 |
|---|---|---|---|---|---|
| Desaktivator | | | | | |
| ·Surlyn 9320 | | 7 | | | |
| ·Luvax EAS | | | 1,5 | | |
| ·Primacor 3340 | | | | | 3,5 |
| ·Lucalen 2920 | | | | 6 | |
| Granulate (Eigenschaften) | | | | | |
| ·$\eta_{rel}$ | 1,95 | 2,05 | 1,99 | 2,12 | 2,18 |
| ·MVR | 72 | 25,5 | 62,7 | 10,8 | 15,2 |
| ·$\eta_{rel}$ Kegel | 1,85 | 2,00 | 1,88 | 2,09 | 2,11 |
| ·$\Delta\eta_{rel}$ | 0,10 | 0,05 | 0,11 | 0,03 | 0,07 |
| ·MGV (je 1000) | | | | | |
| "-Number" $M_n$ | 5,5 | 31 | 18,5 | | 23 |
| "-Weight" $M_w$ | 28 | 69 | 41,5 | | 53,0 |
| Polydispersität D | 5,1 | 2,2 | 2,2 | | 2,3 |
| VKA | 0,11 | 0,05 | 0,11 | 0,02 | 0,05 |

# Fig. 5

Tabelle 5b

Hitzelagerung und Bewitterung
Test an SZZ-Stäben; Messwert; SZZ [kJ/m$^2$]

| Hitzelagerung bei 150°C | | Versuch Nr. | | | | |
|---|---|---|---|---|---|---|
| | | 6x | 16 | 17 | 18 | 19 |
| Stunden: | 0= Start | 330 | 490 | 320 | 540 | 530 |
| | 48 | 225 | 360 | 220 | 330 | 290 |
| | 72 | 60 | 260 | 190 | 220 | 250 |
| | 144 | 15 | 200 | 40 | 200 | 240 |
| | 192 | - | 41 | - | 175 | 90 |
| | 288 | - | 20 | - | 40 | 35 |
| Schnellbewitterung / Wether-0-Meter | | | | | | |
| Stunden: | 0 = Start | 330 | 490 | 500 | 540 | 530 |
| | 250 | 430 | 550 | 400 | 540 | 510 |
| | 500 | 380 | 510 | 400 | 520 | 440 |
| | 750 | 420 | 440 | 410 | 470 | 450 |
| | 1000 | 340 | 470 | 420 | 430 | 400 |
| | 1250 | 400 | 440 | 360 | 420 | 390 |
| | 1500 | 370 | 380 | 350 | 400 | 360 |
| | 2000 | 300 | 315 | 310 | 340 | 330 |
| | 3000 | 220 | 240 | 290 | 250 | 270 |

# Fig. 6

Tabelle 6

Vergleich verschiedener Desaktivatoren verwendet mit Granulat entsprechend 125 Mol LC-12 pro Mol Flüssig-katalysator; Zugabe in Gew-%.

| Versuch Nr. | 20 | 21 | 22 | 23 | 24 |
|---|---|---|---|---|---|
| Desaktivator<br><br>•$H_3PO_4$,85% | | | | 0,175 | |
| •Primacor 1410 | 4,0 | | | | |
| •Primacor 3340 | | 5,0 | | | |
| •Lucalen 2920 | | | 10,0 | | |
| •SMA 1000 | | | | 0,53 | |
| •IPS | | | | | 0,38 |
| Analytik | | | | | |
| • $\eta_{rel}$ | 1,78 | 1,76 | 1,73 | 1,77 | 1,80 |
| •MVR | 128 | 138 | 126 | 205 | 161 |
| • $\eta_{rel}$ Kegel | 1,77 | 1,76 | 1,72 | 1,74 | 1,76 |
| VKA | 0,02 | 0 | 0,02 | 0,05 | 0,06 |
| Mechanische Werte | | | | | |
| •KSZ  23°C<br>       -40°C | 6,3<br>6,3 | 6,3<br>6,1 | 6,8<br>6,3 | <br>6,4 | 6,1<br>6,1 |
| •Fliessfestigkeit | 40 | 39 | 37 | 43 | 43 |
| •Bruchfestigkeit | 61 | 58 | 60 | 60 | 67 |
| •Bruchdehnung % | 430 | 410 | 450 | 400 | 460 |

Fig. 7    Puffergebiete